(19) **Europäisches Patentamt / European Patent Office / Office européen des brevets**

(11) **EP 4 668 624 A1**

(12) **EUROPEAN PATENT APPLICATION**
published in accordance with Art. 153(4) EPC

(43) Date of publication:
**24.12.2025 Bulletin 2025/52**

(21) Application number: **23921786.2**

(22) Date of filing: **15.02.2023**

(51) International Patent Classification (IPC):
**H04L 1/00** (2006.01)

(52) Cooperative Patent Classification (CPC):
**H04L 1/00; H04W 72/541**

(86) International application number:
**PCT/CN2023/076280**

(87) International publication number:
**WO 2024/168623 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Dehns Germany Partnerschaft mbB**
**Theresienstraße 6-8**
**80333 München (DE)**

(54) **COMMUNICATION METHOD AND DEVICE AND STORAGE MEDIUM**

(57) The present disclosure relates to a communication method and device and a storage medium. The communication method is executed by a terminal, and comprises: scrambling a plurality of different codewords by using different scrambling modes, the plurality of different codewords being mapped to different data layers; and on the basis of the plurality of different scrambled codewords, performing communication based on a physical uplink shared channel. By means of the present disclosure, transmission interference between different codewords in uplink transmission can be reduced, thereby ensuring normal communication, and improving transmission quality.

Scrambling a plurality of different codewords by using different scrambling manners, in which the plurality of different codewords are mapped to different data layers — S11

Performing PUSCH-based communication based on the plurality of different codewords scrambled — S12

FIG. 3

Processed by Luminess, 75001 PARIS (FR)

Description

## TECHNICAL FIELD

The present disclosure relates to the communication field, and specifically, to a communication method, device and storage medium.

## BACKGROUND

With the development of communication technology, the number of transmission antennas is increased in order to enable the uplink to have a high transmission rate and throughput. For example, the current protocol release is studying increasing the number of transmission antennas for the uplink to 8.

In the related technology, a fixed mapping from a transmission block to a codeword is employed. For a case where a number of layers (or rank) is less than or equal to 4, a single codeword is used. For a case where the rank exceeds 4, two codewords are used. Currently, it considers increasing the number of transmission antennas to 8 in a physical uplink shared channel (PUSCH) transmission. Therefore, the PUSCH transmission supports up to 8 layers of uplink transmission, i.e., supports a mapping from a plurality of codewords to layers.

An uplink communication in which a plurality of different codewords are mapped to different data layers is being studied, for example, a plurality of codewords are scrambled and enhanced to improve transmission quality. However, scrambling the plurality of codewords for PUSCH transmission needs further study.

## SUMMARY

In order to overcome the problem in the related art, the present disclosure provides a communication method, device and storage medium.

A first aspect of embodiments of the present disclosure provides a communication method performed by a terminal, including: scrambling a plurality of different codewords by using different scrambling manners, wherein the plurality of different codewords are mapped to different data layers; and performing communication based on the plurality of different codewords scrambled, wherein the communication is based on the physical uplink shared channel.

In an implementation, scrambling the plurality of different codewords by using the different scrambling manners includes: scrambling the plurality of different codewords by respectively using different pseudo-random sequence functions, wherein the different pseudo-random sequence functions are determined based on different random sequence initialization functions.

In an implementation, the random sequence initialization functions are determined based on identity information, and the different random sequence initialization functions correspond to different identity information, the identity information includes terminal identity information, or the identity information includes the terminal identity information and a codeword identity, and wherein the terminal identity information includes a radio network temporary identity (RNTI) corresponding to the terminal and a cell identity of a serving cell of the terminal.

In an implementation, the communication method further includes: receiving a plurality of different first identity configuration parameters sent by a network device, wherein the different first identity configuration parameters are configured to configure the different identity information.

In an implementation, the communication method further includes: receiving a second identity configuration parameter and offset information sent by a network device, the second identity configuration parameter is configured to configure first identity information in the different identity information, and the offset information is configured for the terminal to determine second identity information based on the first identity information and the offset information, and the second identity information is identity information in the different identity information different from the first identity information.

In an implementation, the second identity information, the first identity information, and the offset information satisfy a formula of: $n\_ID\_1=\mod(n\_ID\_0+OFFSET,1024)$, where $n\_ID\_1$ represents the second identity information, $n\_ID\_0$ represents the first identity information, OFFSET represents the offset information, and mod() represents a modulo function.

In an implementation, the physical uplink shared channel (PUSCH) includes: a dynamic grant physical uplink shared channel (DG PUSCH); or a configured grant physical uplink shared channel (CG PUSCH).

A second aspect of embodiments of the present disclosure provides a communication method by a network device, including: performing communication with a terminal based on a plurality of different codewords scrambled, wherein the communication is based on a physical uplink shared channel, the plurality of different codewords are mapped to different data layers, and the plurality of different codewords are scrambled by respectively using different scrambling manners.

In an implementation, the plurality of different codewords is scrambled by respectively using different pseudo-random sequence functions, wherein the different pseudo-random sequence functions are determined based on different random sequence initialization functions.

In an implementation, the random sequence initialization functions are determined based on identity information, and the different random sequence initialization functions correspond to different identity information, the identity information includes terminal identity information, or the identity information includes the terminal identity information and a codeword identity, and wherein the terminal identity information includes a radio network temporary identity (RNTI) corresponding to the terminal and a cell identity of a serving cell of the terminal.

In an implementation, the communication method further includes: sending a plurality of different first identity configuration parameters, wherein the different first identity configuration parameters are configured to configure the different identity information.

In an implementation, the communication method further includes: sending a second identity configuration parameter and offset information, the second identity configuration parameter is configured to configure first identity information in the different identity information, and the offset information is configured for the terminal to determine second identity information based on the first identity information and the offset information, and the second identity information is identity information in the different identity information different from the first identity information.

In an implementation, the second identity information, the first identity information, and the offset information satisfy a formula of: $n\_ID\_1 = mod(n\_ID\_0 + OFFSET, 1024)$, where $n\_ID\_1$ represents the second identity information, $n\_ID\_0$ represents the first identity information, OFFSET represents the offset information, and mod() represents a modulo function.

In an implementation, the physical uplink shared channel (PUSCH) includes: a dynamic grant physical uplink shared channel (DG PUSCH); or a configured grant physical uplink shared channel (CG PUSCH).

A third aspect of embodiments of the present disclosure provides a communication device, including: a processing module, configure to scramble a plurality of different codewords by using different scrambling manners, wherein the plurality of different codewords are mapped to different data layers; and a communication module, configured to perform communication based on the plurality of different codewords scrambled, wherein the communication is based on the physical uplink shared channel.

In an implementation, the processing module is further configured to: scramble the plurality of different codewords by respectively using different pseudo-random sequence functions, wherein the different pseudo-random sequence functions are determined based on different random sequence initialization functions.

In an implementation, the random sequence initialization functions are determined based on identity information, and the different random sequence initialization functions correspond to different identity information, the identity information includes terminal identity information, or the identity information includes the terminal identity information and a codeword identity, and wherein the terminal identity information includes a radio network temporary identity (RNTI) corresponding to the terminal and a cell identity of a serving cell of the terminal.

In an implementation, the communication module is further configured to: receive a plurality of different first identity configuration parameters sent by a network device, wherein the different first identity configuration parameters are configured to configure the different identity information.

In an implementation, the communication module is further configured to: receive a second identity configuration parameter and offset information sent by a network device, the second identity configuration parameter is configured to configure first identity information in the different identity information, and the offset information is configured for the terminal to determine second identity information based on the first identity information and the offset information, and the second identity information is identity information in the different identity information different from the first identity information.

In an implementation, the second identity information, the first identity information, and the offset information satisfy a formula of: $n\_ID\_1 = mod(n\_ID\_0 + OFFSET, 1024)$, where $n\_ID\_1$ represents the second identity information, $n\_ID\_0$ represents the first identity information, OFFSET represents the offset information, and mod() represents a modulo function.

In an implementation, the physical uplink shared channel (PUSCH) includes: a dynamic grant physical uplink shared channel (DG PUSCH); or a configured grant physical uplink shared channel (CG PUSCH).

A fourth aspect of embodiments of the present disclosure provides a communication device, including: a communication module, configured to perform communication with a terminal based on a plurality of different codewords scrambled, wherein the communication is based on a physical uplink shared channel, the plurality of different codewords are mapped to different data layers, and the plurality of different codewords are scrambled by respectively using different scrambling manners.

In an implementation, the plurality of different codewords is scrambled by respectively using different pseudo-random sequence functions, wherein the different pseudo-random sequence functions are determined based on different random sequence initialization functions.

In an implementation, the random sequence initialization functions are determined based on identity information, and the different random sequence initialization functions correspond to different identity information, the identity information includes terminal identity information, or the identity information includes the terminal identity information and a codeword identity, and wherein the terminal identity information includes a radio network temporary identity (RNTI) corresponding to the terminal and a cell identity of a serving cell of the terminal.

In an implementation, the communication module is further configured to: send a plurality of different first identity configuration parameters, wherein the different first identity configuration parameters are configured to configure the different identity information.

In an implementation, the communication module is further configured to: send a second identity configuration parameter and offset information, the second identity configuration parameter is configured to configure first identity information in the different identity information, and the offset information is configured for the terminal to determine second identity information based on the first identity information and the offset information, and the second identity information is identity information in the different identity information different from the first identity information.

In an implementation, the second identity information, the first identity information, and the offset information satisfy a formula of: $n\_ID\_1=mod(n\_ID\_0+OFFSET,1024)$, where $n\_ID\_1$ represents the second identity information, $n\_ID\_0$ represents the first identity information, OFFSET represents the offset information, and mod() represents a modulo function.

In an implementation, the physical uplink shared channel (PUSCH) includes: a dynamic grant physical uplink shared channel (DG PUSCH); or a configured grant physical uplink shared channel (CG PUSCH).

A fifth aspect of embodiments of the present disclosure provides a communication device, including: a processor; and a memory for storing processor-executable instructions, wherein the processor is configured to call the instructions stored in the memory to perform the communication method according to the first aspect or any implementation thereof.

A sixth aspect of embodiments of the present disclosure provides a communication device, including: a processor; and a memory for storing processor-executable instructions, wherein the processor is configured to call the instructions stored in the memory to perform the communication method according to the second aspect or any implementation thereof.

A seventh aspect of embodiments of the present disclosure provides a storage medium having instructions stored thereon that, when being executed by a processor of a terminal, enable the terminal to perform the communication method according to the first aspect or any implementation thereof.

An eighth aspect of embodiments of the present disclosure provides a storage medium having instructions stored thereon that, when executed by a processor of a network device, enable the network device to perform the communication method according to the first aspect or any implementation thereof.

The technical solution provided by the embodiments of the present disclosure may include the following beneficial effects. A plurality of codewords are scrambled by using different scrambling manners, and PUSCH-based communication is performed based on the plurality of different codewords scrambled, which enables a plurality of codewords to be scrambled in PUSCH transmission with a maximum of 8 layers of uplink transmission. This reduces transmission interference between different codewords in the uplink transmission, ensures normal communication, and improves transmission quality.

It is to be understood that the above general description and the following detailed descriptions are exemplary and explanatory only and do not limit the present disclosure.

## BRIEF DESCRIPTION OF THE DRAWINGS

The accompanying drawings herein, which are incorporated into and form a part of the specification, illustrate embodiments consistent with the present disclosure and are used in conjunction with the specification to explain the principle of the present disclosure.

FIG. 1 is a schematic diagram illustrating a wireless communication system according to an exemplary embodiment.
FIG. 2 is a schematic diagram illustrating a mapping manner from codewords to layers in physical downlink control channel transmission according to an exemplary embodiment.
FIG. 3 is a flowchart illustrating a communication method according to an exemplary embodiment.
FIG. 4 is a flowchart illustrating another communication method according to an exemplary embodiment.
FIG. 5 is a flowchart illustrating another communication method according to an exemplary embodiment.
FIG. 6 is a flowchart illustrating another communication method according to an exemplary embodiment.
FIG. 7 is a flowchart illustrating another communication method according to an exemplary embodiment.
FIG. 8 is a flowchart illustrating another communication method according to an exemplary embodiment.
FIG. 9 is a flowchart illustrating another communication method according to an exemplary embodiment.
FIG. 10 is a flowchart illustrating another communication method according to an exemplary embodiment.

FIG. 11 is a flowchart illustrating another communication method according to an exemplary embodiment.

FIG. 12 is a flowchart illustrating another communication method according to an exemplary embodiment.

FIG. 13 is a flowchart illustrating another communication method according to an exemplary embodiment.

FIG. 14 is a block diagram illustrating a communication device according to an exemplary embodiment.

FIG. 15 is a block diagram illustrating another communication device according to an exemplary embodiment.

FIG. 16 is a block diagram illustrating another communication device according to an exemplary embodiment.

FIG. 17 is a block diagram illustrating another communication device according to an exemplary embodiment.

## DETAILED DESCRIPTION

Exemplary embodiments will be described herein in detail, examples of which are illustrated in the accompanying drawings. When the following description is made with reference to the accompanying drawings, the same reference numerals in different accompanying drawings indicate the same or similar elements unless otherwise indicated. The implementations described in the following exemplary embodiments do not represent all implementations consistent with the present disclosure.

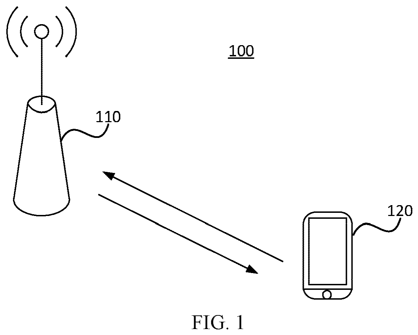

The communication method involved in the present disclosure may be applied in a wireless communication system 100 shown in FIG. 1. The network system may include a network device 110 and a terminal 120. It is to be understood that the wireless communication system shown in FIG. 1 is for schematic illustration only, and the wireless communication system may further include other network devices, for example, a core network device, a wireless relay device, a wireless backhaul device or the like, which are not shown in FIG. 1. The number of network devices and the number of terminals included in the wireless communication system are not limited in the embodiments of the present disclosure.

It is further to be understood that the wireless communication system in embodiments of the present disclosure is a network providing a wireless communication function. The wireless communication system may employ different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), and Carrier Sense Multiple Access with Collision Avoidance. Depending on the capacity, rate, latency, and other factors of different networks, the networks may be classified into a 2G (Generation) network, a 3G network, a 4G network, or a future evolution network, such as a 5G (5th Generation Wireless Communication System) network, which can also be referred to as a New Radio (NR) network. For ease of description, a wireless communication network may be simply referred to as a network in the present disclosure.

Further, the network device 110 involved in the present disclosure may also include a wireless access network device. The wireless access network device may be a base station, an evolved Node B (eNB), a home base station, an Access Point (AP) in a Wireless Fidelity (WIFI) system, a wireless relay node, a wireless backhaul node, a Transmission Point (TP) or the like, may also be a gNB in a NR system, or may be a component or part that constitutes a base station, or the like. The network device may also be an in-vehicle device when in a Vehicle to Everything (V2X) communication system. It is to be understood that the specific technology and the specific device form for the network device are not limited in the embodiments of the present disclosure.

Further, the terminal 120 involved in the present disclosure may also be referred to as a terminal device, User Equipment (UE), Mobile Station (MS), Mobile Terminal (MT) or the like, which is a device that provides voice and/or data connectivity to a user, for example, the terminal may be a handheld device and an in-vehicle device with a wireless connectivity function or the like. Currently, some examples of terminals are: a mobile phone, a pocket personal computer (PPC), a palmtop computer, a personal digital assistant (PDA), a laptop computer, a tablet computer, a wearable device, an in-vehicle device, or the like. In addition, the terminal device may also be an in-vehicle device when in a Vehicle to Everything (V2X) communication system. It is to be understood that the specific technology and the specific device form for the terminal are not limited in the embodiments of the present disclosure.

In an embodiment of the present disclosure, the network device 110 and the terminal 120 may communicate data with each other through any feasible wireless communication technology. The transmission channel for the network device 110 to send the data to the terminal 120 is referred to as a downlink (DL), and the transmission channel for the terminal 120 to send the data to the network device 110 is referred to as an uplink channel/uplink (UL). It is to be understood that the network device involved in the embodiments of the present disclosure may be a base station. Of course, the network device may also be any other possible network device, and the terminal may be any possible terminal, which is not limited in the present disclosure.

In the related art, in the transmission between a terminal and a network device, a fixed mapping order from a transmission block to a codeword is used for a mapping from a codework to layers (or rank). For a case where the rank is less than or equal to 4, a single codeword is used. For a case where the rank exceeds 4, two codewords are used. Currently, a downlink may support up to two codewords, and an uplink supports one codeword.

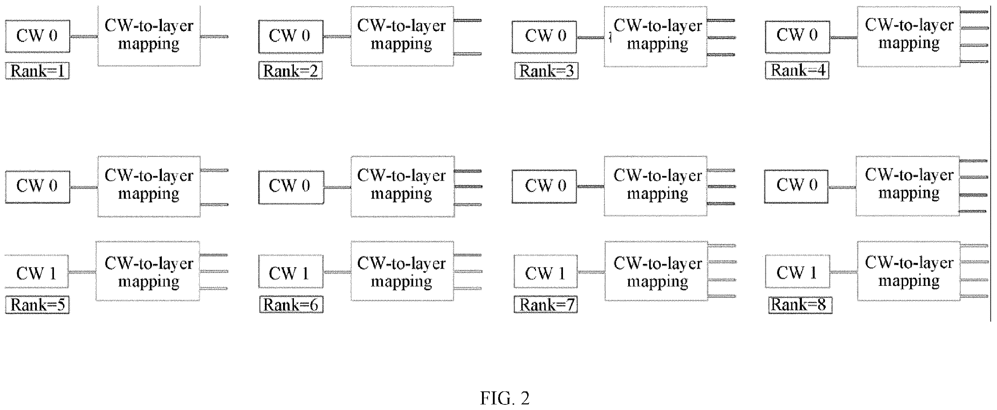

FIG. 2 is a schematic diagram illustrating a mapping manner from codewords (CW) to layers in physical downlink shared channel (PDSCH) transmission according to an exemplary embodiment.

When the number of layers is less than or equal to 4, a single codeword 0 is used correspondingly. When the number of layers exceeds 4, two codewords are used correspondingly, i.e., codeword 0 and codeword 1 are used. For a case where two codewords are used for transmission, a mapping of codewords to layers adopts a mapping manner that is as balanced as possible. When the number of layers is odd, the number of layers mapped by codeword 0 is one less than the number of layers mapped by codeword 1. When the number of layers is even, the number of layers mapped by codeword 0 is the same as the number of layers mapped by codeword 1.

Table 1 illustrates a codeword-to-layer mapping solution for spatial multiplexing, where different complex-valued modulation symbols are mapped to different data layers based on different numbers of layers. Here, layer denotes a data layer, symb denotes a complex-valued modulation symbol, $M_{symb}^{layer}$ denotes the number of complex-valued modulation symbols, $M_{symb}^{(0)}$ denotes the complex-valued modulation symbol corresponding to a first codeword CW0, and $M_{symb}^{(1)}$ denotes the complex-valued modulation symbol corresponding to a second codeword CW1. i denotes a variable indicating the complex-valued modulation symbol corresponding to the current number of layers. $x(M_{symb}^{layer}-1)$ denotes a set of complex-valued modulation symbols corresponding to different data layers, $x^{(0)}(i)$ denotes a set of complex-valued modulation symbols corresponding to a first data layer, with 0 being obtained by subtracting 1 from the current number of layers, and $x^{(1)}(i)$ denotes a set of complex-valued modulation symbols corresponding to a second data layer. $d(M_{symb}^{layer}-1)$ denotes a set of complex-valued modulation symbols corresponding to different codewords, $d^{(0)}(i)$ denotes a set of complex-valued modulation symbols corresponding to a first codeword, with 0 being obtained by subtracting 1 from the current number of codewords, and $d^{(1)}(i)$ denotes a set of complex-valued modulation symbols corresponding to a second codeword.

As shown in Table 1, when there is only one codeword, and the first codeword CW0 is mapped to 4 layers, $M_{symb}^{layer}=M_{symb}^{(0)}/4$, the complex-valued modulation symbol $M_{symb}^{(0)}$ is evenly distributed across the 4 layers. When there are two codewords, and the two codewords are mapped to 8 layers, the complex-valued modulation symbols of the first codeword CW0 and the second codeword CW1 are equal, i.e., $M_{symb}^{(0)}$ and $M_{symb}^{(1)}$ are equal, and $M_{symb}^{layer}=M_{symb}^{(0)}/4=M_{symb}^{(1)}/4$. When there are two codewords, and the two codewords are mapped to 5 layers or 7 layers, i.e., the two codewords are mapped to odd number of layers, the complex-valued symbols of the first codeword CW0 and the second codeword CW1 are not equal, i.e., $M_{symb}^{(0)}$ and $M_{symb}^{(1)}$ are different, but the final numbers $M_{symb}^{layer}$ of complex-valued modulation symbols of respective layers to which bitstream is mapped are equal.

Table 1

| Number of layers | Number of codewords | Codeword-to-layer mapping $i = 0,1,..., M_{symb}^{layer} - 1$ | |
|---|---|---|---|
| 1 | 1 | $x^{(0)}(i) = d^{(0)}(i)$ | $M_{symb}^{layer} = M_{symb}^{(0)}$ |
| 2 | 1 | $x^{(0)}(i) = d^{(0)}(2i)$ <br> $x^{(1)}(i) = d^{(0)}(2i + 1)$ | $M_{symb}^{layer} = M_{symb}^{(0)}/2$ |
| 3 | 1 | $x^{(0)}(i) = d^{(0)}(3i)$ <br> $x^{(1)}(i) = d^{(0)}(3i + 1)$ <br> $x^{(2)}(i) = d^{(0)}(3i + 2)$ | $M_{symb}^{layer} = M_{symb}^{(0)}/3$ |
| 4 | 1 | $x^{(0)}(i) = d^{(0)}(4i)$ <br> $x^{(1)}(i) = d^{(0)}(4i + 1)$ <br> $x^{(2)}(i) = d^{(0)}(4i + 2)$ <br> $x^{(3)}(i) = d^{(0)}(4i + 3)$ | $M_{symb}^{layer} = M_{symb}^{(0)}/4$ |

(continued)

| Number of layers | Number of codewords | Codeword-to-layer mapping $i = 0,1,..., M_{symb}^{layer} - 1$ | |
|---|---|---|---|
| 5 | 2 | $x^{(0)}(i) = d^{(0)}(2i)$<br>$x^{(1)}(i) = d^{(0)}(2i + 1)$<br>$x^{(2)}(i) = d^{(1)}(3i)$<br>$x^{(3)}(i) = d^{(1)}(3i+ 1)$<br>$x^{(4)}(i) = d^{(1)}(3i + 2)$ | $M_{symb}^{layer} = M_{symb}^{(0)}/2 = M_{symb}^{(1)}/3$ |
| 6 | 2 | $x^{(0)}(i) = d^{(0)}(3i)$<br>$x^{(1)}(i) = d^{(0)}(3i + 1)$<br>$x^{(2)}(i) = d^{(0)}(3i + 2)$<br>$x^{(3)}(i) = d^{(1)}(3i)$<br>$x^{(4)}(i) = d^{(1)}(3i + 1)$<br>$x^{(5)}(i) = d^{(1)}(3i + 2)$ | $M_{symb}^{layer} = M_{symb}^{(0)}/3 = M_{symb}^{(1)}/3$ |
| 7 | 2 | $x^{(0)}(i) = d^{(0)}(3i)$<br>$x^{(1)}(i) = d^{(0)}(3i + 1)$<br>$x^{(2)}(i) = d^{(0)}(3i + 2)$<br>$x^{(3)}(i) = d^{(1)}(4i)$<br>$x^{(4)}(i) = d^{(1)}(4i + 1)$<br>$x^{(5)}(i) = d^{(1)}(4i + 2)$<br>$x^{(6)}(i) = d^{(1)}(4i + 3)$ | $M_{symb}^{layer} = M_{symb}^{(0)}/3 = M_{symb}^{(1)}/4$ |
| 8 | 2 | $x^{(0)}(i) = d^{(0)}(4i)$<br>$x^{(1)}(i) = d^{(0)}(4i + 1)$<br>$x^{(2)}(i) = d^{(0)}(4i + 2)$<br>$x^{(3)}(i) = d^{(0)}(4i + 3)$<br>$x^{(4)}(i) = d^{(1)}(4i)$<br>$x^{(5)}(i) = d^{(1)}(4i + 1)$<br>$x^{(6)}(i) = d^{(1)}(4i + 2)$<br>$x^{(7)}(i) = d^{(1)}(4i + 3)$ | $M_{symb}^{layer} = M_{symb}^{(0)}/4 = M_{symb}^{(1)}/4$ |

With the development of communication technology, the number of transmission antennas is increased in order to enable the uplink to have a high transmission rate and throughput. For example, the current protocol release is studying increasing the number of transmission antennas for the uplink to 8.

In the related technology, a fixed mapping from a transmission block to a codeword is employed. For a case where a number of layers (or rank) is less than or equal to 4, a single codeword is used. For a case where the rank exceeds 4, two codewords are used. In the physical uplink shared channel (PUSCH) transmission studied and supported in the previous protocol release, the PUSCH transmission supports a maximum of 4 layers and a maximum of one codeword.

The scrambling manner for a single codeword in the PUSCH transmission may be based on a radio network temporary identity (RNTI, or cell-radio network temporary identifier) and terminal identity information (n_ID). For example, the formula of C_init=n_RNTI*2^15+n_ID may be used to determine a random sequence initialization function, a pseudo-random sequence function may be determined based on the random sequence initialization function, and the single codeword for uplink PUSCH transmission is then scrambled using this pseudo-random sequence function. Here, C_init is the random sequence initialization function, n_RNTI is the wireless network identity, and n_ID is the terminal identity. The n_ID is configured by the network via a parameter of data Scrambling Identity PUSCH.

Currently, it considers increasing the number of transmission antennas to 8 in PUSCH transmission. Therefore, the PUSCH transmission supports up to 8 layers of uplink transmission, i.e., supports a mapping from a plurality of codewords to layers. An uplink communication in which a plurality of different codewords are mapped to different data layers is being studied, for example, a plurality of codewords are scrambled and enhanced to improve transmission quality. However, scrambling the plurality of codewords for uplink PUSCH transmission needs further study.

Therefore, the present disclosure provides a communication method in which a plurality of codewords are scrambled by using different scrambling manners, and PUSCH-based communication is performed based on the plurality of different codewords scrambled, which enables a plurality of codewords to be scrambled in PUSCH transmission in which the plurality of codewords are used for uplink transmission. This reduces transmission interference between different codewords in the uplink transmission, ensures normal communication, and improves transmission quality.

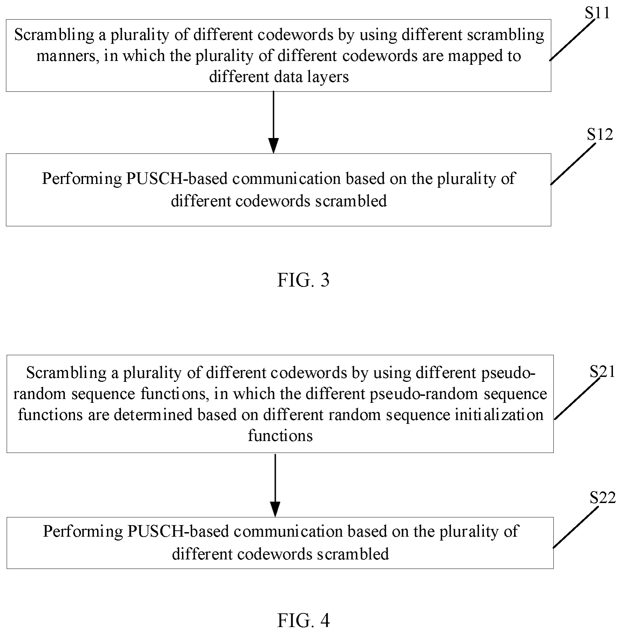

FIG. 3 is a flowchart illustrating a communication method according to an exemplary embodiment. As shown in Figure 3, the communication method includes the following step.

In step S11, a plurality of different codewords are scrambled by using different scrambling manners, in which the plurality of different codewords are mapped to different data layers.

In an embodiment of the present disclosure, for example, the plurality of different codewords may be two codewords used when the rank exceeds 4, for example, in the case of an uplink transmission using up to 8 layers.

In step S12, PUSCH-based communication is performed based on the plurality of different codewords scrambled.

In the communication method provided by the embodiment of the present disclosure, the plurality of codewords is mapped to different data layers, and the plurality of codewords is scrambled by using different scrambling manners, which reduces transmission interference between different codewords and improves transmission quality.

In some implementations of the communication method provided by the embodiment of the present disclosure, the terminal may scramble the plurality of different codewords by respectively using different pseudo-random sequence functions.

The different pseudo-random sequence functions are determined based on different random sequence initialization functions.

FIG. 4 is a flowchart illustrating a communication method according to an exemplary embodiment.

In an implementation, as shown in FIG. 4, the communication method includes the following steps.

In step S21, a plurality of different codewords are scrambled by using different pseudo-random sequence functions, in which the different pseudo-random sequence functions are determined based on different random sequence initialization functions.

In an implementation, the pseudo-random sequence may be used to scramble the codeword. For example, the scrambling may be completed by multiplying an original signal by a pseudo-random sequence to obtain a new signal. The pseudo-random sequence is generated based on the pseudo-random sequence function. The terminal may generate a plurality of different pseudo-random sequence functions, obtain the pseudo-random sequence through the pseudo-random sequence function, and scramble the codeword by using the pseudo-random sequence.

In an implementation, the different pseudo-random sequence functions may be determined based on different random sequence initialization functions. The random sequence initialization function is a function of a pseudo-random sequence initial value. A plurality of random sequence initialization functions may be generated by using different longest linear feedback shift register sequence functions, such as m-sequences, and the pseudo-random sequence function may be determined based on the random sequence initialization function.

In step S22, PUSCH-based communication is performed based on the plurality of different codewords scrambled.

In the present disclosure, the different pseudo-random sequence functions are determined by determining different random sequence initialization functions, and different codewords are scrambled by using the pseudo-random sequence functions, which enables a plurality of codewords to be scrambled in PUSCH transmission with a maximum of 8 layers of uplink transmission. This reduces transmission interference between different codewords in the uplink transmission, ensures normal communication, and improves transmission quality.

In some implementations, the random sequence initialization functions are determined based on identity information, and the different random sequence initialization functions correspond to different identity information. The identity information includes terminal identity information, or the identity information includes the terminal identity information and a codeword identity. The terminal identity information includes a radio network temporary identity (RNTI) corresponding to the terminal and a cell identity of a serving cell of the terminal.

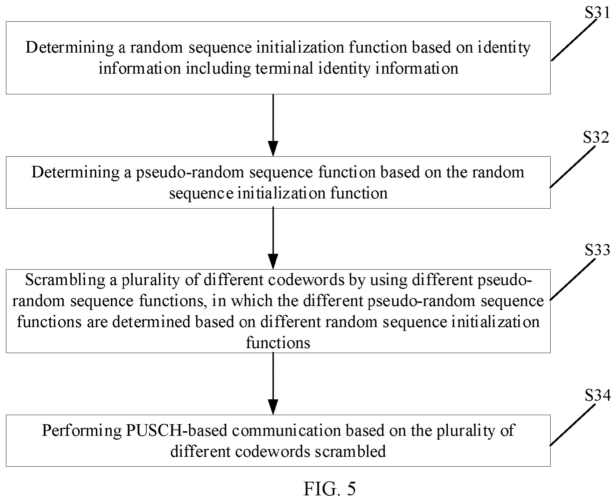

FIG. 5 is a flowchart illustrating a communication method according to an exemplary embodiment.

In an implementation, as shown in FIG. 5, the communication method includes the following steps.

In step S31, a random sequence initialization function is determined based on identity information including terminal identity information.

In an implementation, different random sequence initialization functions may be determined based on different identity information. It is to be understood that the random sequence initialization functions for different codewords are distinguished by different identity information. The terminal may determine different random sequence initialization functions based on a longest linear feedback shift register sequence function and different identity information.

In an implementation, the identity information may include terminal identity information, and the terminal identity information may include RNTI corresponding to the terminal and a cell identity of a serving cell of the terminal. The terminal may generate, based on different terminal identity information mentioned above, different random sequence initialization functions, which are used to scramble different codewords. For example, the following function is a random sequence initialization function determined by the terminal identity information:

$$C\_init=n\_RNTI*2^{15}+n\_ID$$

where C_init represents an initial value of a pseudo-random sequence, which is determined by the pseudo-random sequence initialization function; n_RNTI is a type of terminal identity information which represents a radio network temporary identity (RNTI) corresponding to the terminal; and n_ID is another type of terminal identity information which represents a cell identity of a serving cell of the terminal.

In an implementation, the terminal may configure different identity information to obtain different random sequence initialization functions. As in the exemplary random sequence initialization function above, the terminal may configure different n_ID to obtain different random sequence initialization functions for scrambling.

This manner is understood as a scrambling manner by multiplexing a single PUSCH codeword, but for different codewords, different terminal identity information is used to obtain different random sequence initialization functions for scrambling different codewords.

In step S32, a pseudo-random sequence function is determined based on the random sequence initialization function.

In an implementation, the random sequence initialization function is a function of a pseudo-random sequence initial value. The terminal may determine different pseudo-random sequence initial values based on different random sequence initialization functions, thereby determining the pseudo-random sequence functions. The pseudo-random sequences obtained from different pseudo-random sequence functions are used to scramble different codewords.

In step S33, a plurality of different codewords are scrambled by using different pseudo-random sequence functions, in which the different pseudo-random sequence functions are determined based on different random sequence initialization functions.

In step S34, PUSCH-based communication is performed based on the plurality of different codewords scrambled.

In an implementation, the terminal may generate different pseudo-random sequences based on different pseudo-random sequence functions, scramble a plurality of different codewords, modulate the plurality of different codewords scrambled to be mapped to different data layers, and perform the PUSCH-based communication.

In the present disclosure, the different pseudo-random sequence functions are determined by determining different random sequence initialization functions, and different codewords are scrambled by using the pseudo-random sequence functions, which enables a plurality of codewords to be scrambled in PUSCH transmission with a maximum of 8 layers of uplink transmission. This reduces transmission interference between different codewords in the uplink transmission, ensures normal communication, and improves transmission quality.

In some implementations, the terminal may generate a random sequence initialization function based on terminal identity information and a codeword identity.

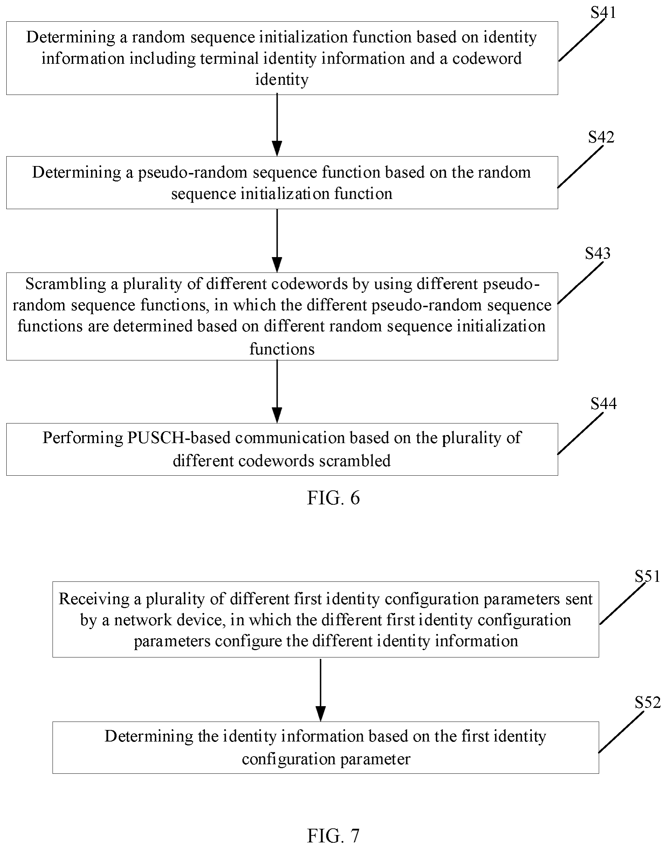

FIG. 6 is a flowchart illustrating a communication method according to an exemplary embodiment. In an implementation, as shown in FIG. 6, the communication method includes the following steps.

In step S41, a random sequence initialization function is determined based on identity information, which includes terminal identity information and a codeword identity.

In an implementation, in an implementation, the identity information may include terminal identity information and codeword identity information. For example, the following function is a random sequence initialization function determined based on the terminal identity information and the codeword identity information:

$$C\_init=n\_RNTI*2^{15}+q*2^{14}+n\_ID$$

where q is codeword identity information which represents different codewords.

In an implementation, the terminal may configure different identity information to obtain different random sequence initialization functions. As in the above exemplary random sequence initialization function, the terminal may configure different n_ID and/or different q to obtain different random sequence initialization functions. For example, when the number of codewords is two, one codeword thereof may be defined as codeword 0 and the other codeword may be defined as codeword 1. The value of the codeword identity q corresponding to the codeword 0 may be 0, and the value of the codeword identity q corresponding to the codeword 1 may be 1. Different values of q result in different random sequence initialization functions. It is to be understood that the above manner of defining the codeword and assigning a value to q is merely illustrative, and the specific implementation thereof may be set according to actual circumstances, which is not limited in the present disclosure.

The execution processes of steps S42, S43, and S44 are similar to those of steps S32, S33, and S34, which are not described in detail here.

In an implementation, the terminal may generate different random sequences based on different pseudo-random sequence functions, scramble a plurality of different codewords, modulate the scrambled codewords to be mapped to different data layers, and perform the PUSCH-based communication.

In the present disclosure, the different pseudo-random sequence functions are determined by determining different random sequence initialization functions, and different codewords are scrambled by using the pseudo-random sequence functions, which enables a plurality of codewords to be scrambled in PUSCH transmission with a maximum of 8 layers of uplink transmission. This reduces transmission interference between different codewords in the uplink transmission, ensures normal communication, and improves transmission quality.

In an embodiment of the present disclosure, the random sequence initialization function is determined based on identity information, and different random sequence initialization functions correspond to different identity information. Different identity information may be configured by a network device.

FIG. 7 is a flowchart illustrating a communication method according to an exemplary embodiment. In an implementation, as shown in FIG. 7, the communication method includes the following steps.

In step S51, a plurality of different first identity configuration parameters sent by a network device are received, in which the different first identity configuration parameters are configured to configure the different identity information.

In an implementation, when configuring the identity information, the terminal may receive a plurality of different first identity configuration parameters sent by a network device. The first identity configuration parameter may be a PUSCH upper layer parameter, i.e., data Scrambling Identity PUSCH. It is to be understood that the first identity configuration parameter may be set according to actual circumstances, which is not limited in the present disclosure. Different first identity configuration information is used to configure different identity information for random sequence initialization functions, thereby obtaining different random sequence initialization functions.

In step S52, the identity information is determined based on the first identity configuration parameter.

In an implementation, the terminal may configure different identity information by using the plurality of different first identity configuration parameters. For example, the different first identity configuration parameters may be first identity configuration parameters a and b, where a is used to configure identity information $n\_ID\_0$ of codeword 0 among two codewords, and b is used to configure identity information $n\_ID\_1$ of codeword 1 among the two codewords. The value range of $n\_ID$ is between 0 and 1023. After a successful configuration, two different random sequence initialization functions are obtained, and then the pseudo-random sequence functions are determined based on the random sequence initialization functions, which are used to scramble different codewords respectively.

In an implementation of the present disclosure, the above steps S41-S44 may also be included on the basis of steps S51 and S52, which are not repeated here.

In the present disclosure, different random sequence initialization functions are obtained by configuring different identity information to determine different random sequence functions and thus scramble different codewords, which reduces transmission interference between different codewords in the uplink transmission, ensures normal communication, and improves transmission quality.

In an implementation of the communication method provided by the present disclosure, in the communication method provided by the present disclosure, the terminal may receive a second identity configuration parameter and offset information sent by a network device, the second identity configuration parameter is configured to configure first identity information in the different identity information, and the offset information is configured for the terminal to determine second identity information based on the first identity information and the offset information. The second identity information is identity information in the different identity information different from the first identity information.

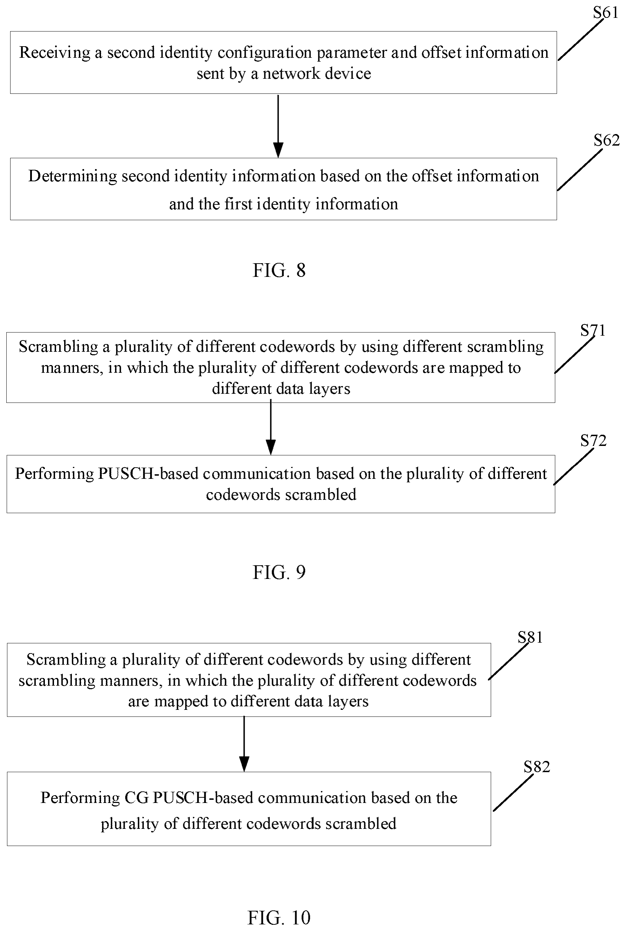

FIG. 8 is a flowchart illustrating a communication method according to an exemplary embodiment.

In an implementation, as shown in FIG. 8, the communication method includes the following steps.

In step S61, a second identity configuration parameter and offset information sent by a network device are received.

In an implementation, the terminal may receive a second identity configuration parameter sent by a network device. The second identity configuration parameter is used to configure first identity information, which may be considered as identity information of codeword 0 among two codewords. The second identity configuration parameter may be a PUSCH upper layer parameter, i.e., data Scrambling Identity PUSCH. It is to be understood that the second identity configuration parameter may be set according to actual circumstances, which is not limited in the present disclosure.

In an implementation, the terminal may also receive offset information sent by a network device. The offset information is used together with the first identity information to determine second identity information, which may be considered as identity information of codeword 1 among the two codewords. It is to be understood that although two codewords are illustrated as an example in the embodiment of the present disclosure, there may be a plurality of codewords, which is not limited in the present disclosure. For example, there may be three codewords: codeword 0, codeword 1, and codeword 2. In this case, the first identity information of codeword 0 may be configured using the second identity configuration parameter received by the terminal, the second identity information of codeword 1 may be determined using the offset information received by the terminal and the first identity information, and the third identity information of codeword 2 may be determined by using another offset information received by the terminal and the second identity information.

In step S62, second identity information is determined based on the offset information and the first identity information.

In an implementation, after receiving the offset information sent by the network device, the terminal may determine second identity information based on the offset information and the first identity information according to a predefined calculation rule.

In an implementation of the communication method provided by the present disclosure, the above steps S41-S44 may be further included on the basis of steps S61 and S62, which are not repeated herein.

In the present disclosure, different random sequence initialization functions are obtained by configuring different identity information to determine different random sequence functions and thus scramble different codewords, which reduces transmission interference between different codewords in the uplink transmission, ensures normal communication, and improves transmission quality.

In an implementation of the communication method provided by the present disclosure, the second identity information, the first identity information, and the offset information satisfy a formula of:

$$n\_ID\_1 = \text{mod}(n\_ID\_0 + OFFSET, 1024)$$

where $n\_ID\_1$ represents the second identity information, $n\_ID\_0$ represents the first identity information, OFFSET represents the offset information, and mod() represents a modulo function.

A value range of $n\_ID\_0$ is between 0 and 1023. A value range of the second identity information $n\_ID\_1$, which is obtained based on the first identity information $n\_ID\_0$, the offset information OFFSET, and the modulo function, is also between 0 and 1023. Different random sequence initialization functions may be determined based on the first identity information and the second identity information.

In the present disclosure, different random sequence initialization functions are obtained by configuring different identity information to determine different random sequence functions and thus scramble different codewords, which reduces transmission interference between different codewords in the uplink transmission, ensures normal communication, and improves transmission quality.

In some implementations, the communication method may be used for dynamic grant (DG) PUSCH or configured grant (CG) PUSCH.

FIG. 9 is a flowchart illustrating a communication method according to an exemplary embodiment.

In an implementation, as shown in FIG. 9, the communication method includes the following steps.

In step S71, a plurality of different codewords are scrambled by using different scrambling manners, in which the plurality of different codewords are mapped to different data layers.

In step S72, DG PUSCH-based communication is performed based on the plurality of different codewords scrambled.

In an implementation, DG PUSCH is used for uplink semi-static PUSCH transmission, and the terminal may scramble a plurality of codewords in the DG PUSCH transmission.

In the present disclosure, a plurality of codewords are scrambled based on DG PUSCH, which reduces transmission interference between different codewords in uplink transmission, ensures normal communication, and improves transmission quality.

FIG. 10 is a flowchart illustrating a communication method according to an exemplary embodiment.

In an implementation, as shown in FIG. 10, the communication method includes the following steps.

In step S81, a plurality of different codewords are scrambled by using different scrambling manners, in which the plurality of different codewords are mapped to different data layers.

In step S82, CG PUSCH-based communication is performed based on the plurality of different codewords scrambled.

In an implementation, CG PUSCH is used for dynamic PUSCH transmission, and the terminal may scramble a plurality of codewords in CG PUSCH.

In the present disclosure, a plurality of codewords are scrambled based on CG PUSCH, which reduces transmission interference between different codewords in uplink transmission, ensures normal communication, and improves transmission quality.

Based on the same concept, the present disclosure also provides a communication method performed by a network device.

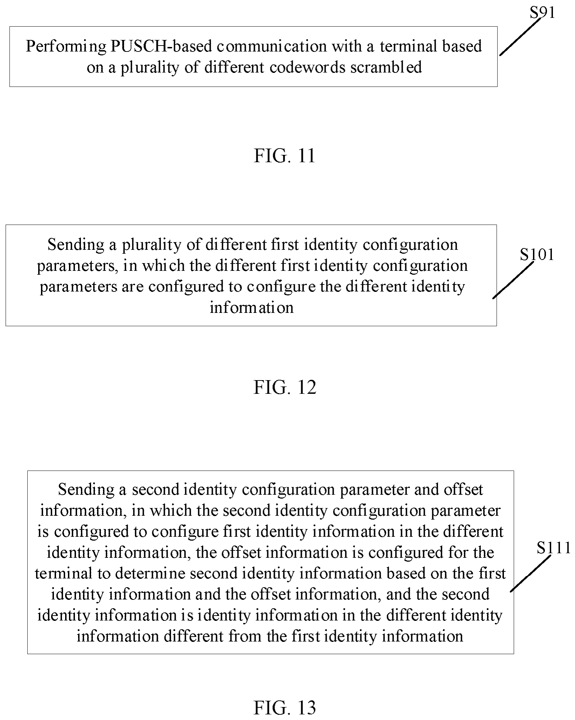

FIG. 11 is a flowchart illustrating a communication method according to an exemplary embodiment. As shown in FIG. 11, the communication method includes:

step S91, performing PUSCH-based communication with a terminal based on a plurality of different codewords scrambled.

In the communication method provided by the embodiment of the present disclosure, uplink communication is performed based on a plurality of codewords scrambled in different manners, which reduces transmission interference between different codewords and improves transmission quality.

In some embodiments, the network device performs the PUSCH-based communication with the terminal based on the plurality of different codewords scrambled, in which the plurality of different codewords is scrambled by respectively using different pseudo-random sequence functions. The different pseudo-random sequence functions are determined based on different random sequence initialization functions.

In some embodiments, the network device performs the PUSCH-based communication with the terminal based on the plurality of different codewords scrambled, in which the random sequence initialization functions are determined based on identity information, and different identity information determines the different random sequence initialization functions.

The identity information includes terminal identity information, or the identity information includes the terminal identity information and a codeword identity. The terminal identity information includes RNTI and a cell identity of a serving cell of the terminal.

In some implementations, FIG. 12 is a flowchart illustrating a communication method according to an exemplary embodiment. In some embodiments, as shown in FIG. 12, the communication method includes:

step S101, sending a plurality of different first identity configuration parameters, in which the different first identity configuration parameters are configured to configure the different identity information.

In an implementation, the network device may send a plurality of different first identity configuration parameters to the terminal, in which the different first identity configuration parameters are configured to configure different identity information, so that different pseudo-random sequences are subsequently determined based on the different identity information to scramble different codewords.

In the present disclosure, the network device sends the first identity configuration parameters, which may configure different identity information, so that the terminal may generate different pseudo-random sequences to scramble different codewords, which reduces transmission interference between different codewords in the uplink transmission, ensures normal communication, and improves transmission quality.

FIG. 13 is a flowchart illustrating a communication method according to an exemplary embodiment. In some embodiments, as shown in FIG. 13, the communication method includes:

step S111, sending a second identity configuration parameter and offset information, in which the second identity configuration parameter is configured to configure first identity information in the different identity information, the offset information is configured for the terminal to determine second identity information based on the first identity information and the offset information, and the second identity information is identity information in the different identity information different from the first identity information.

In an implementation, the network device may receive a request sent by the terminal and send the second identity configuration parameter and the offset information to the terminal. The second identity configuration parameter may configure the first identity information, and the offset information may be used together with the first identity information to determine the second identity information, so that the terminal may generate different pseudo-random sequences based on the first identity information and the second identity information to scramble different codewords.

In the present disclosure, the network device sends the second identity configuration parameter and the offset information, so that the terminal may generate different pseudo-random sequences to scramble different codewords, which reduces transmission interference between different codewords in the uplink transmission, ensures normal communication, and improves transmission quality.

In some implementations, the second identity information, the first identity information, and the offset information satisfy a formula of:

$n\_ID\_1 = mod(n\_ID\_0 + OFFSET, 1024)$

where $n\_ID\_1$ represents the second identity information, $n\_ID\_0$ represents the first identity information, OFFSET represents the offset information, and mod() represents a modulo function.

In an implementation, a value range of $n\_ID\_0$ is between 0 and 1023. A value range of the second identity information $n\_ID\_1$, which is obtained based on the first identity information $n\_ID\_0$, the offset information OFFSET and the modulo function, is also between 0 and 1023. Different random sequence initialization functions may be determined based on the first identity information and the second identity information.

In some implementations, the network device may perform communication based on DG PUSCH or CG PUSCH. The DG PUSCH is used for uplink semi-static PUSCH transmission. The CG PUSCH is used for dynamic PUSCH transmission.

In the present disclosure, a plurality of codewords are scrambled based on DG PUSCH or CG PUSCH, which reduces transmission interference between different codewords in uplink transmission, ensures normal communication, and improves transmission quality.

It is to be understood that some details of the communication process performed by the network device in the embodiments of the present disclosure are similar to those of the communication process performed by the terminal, which are not described in detail herein, and for any parts not described in detail, reference may be made to the communication process of the terminal-side communication method.

It is to be noted that a person skilled in the art may understand that various implementations/embodiments described above in the embodiments of the present disclosure may be used in conjunction with the aforementioned embodiments or may be used independently. Regardless of whether they are used independently or in conjunction with the aforementioned embodiments, the implementation principles thereof are similar. In the embodiments of the present disclosure, some embodiments are described in an implementation manner in which they are used together. Of course, a skilled in the art may understand that such examples are not intended to limit the embodiments of the present disclosure.

Based on the same concept, an embodiment of the present disclosure also provides a communication device.

It is to be understood that in order to achieve the above-mentioned functions, the communication device provided by the embodiment of the present disclosure includes a hardware structure and/or a software module for performing each corresponding function. In conjunction with the units and algorithm steps of each example disclosed by the embodiment of the present disclosure, the embodiment of the present disclosure may be implemented in the form of hardware or a combination of hardware and computer software. Whether a particular function is executed via hardware or computer software driving hardware depends on the specific application and design constraints of the technical solution. A person skilled in the art may use different methods to implement the described function for each specific application, but such implementation should not be considered to go beyond the scope of the technical solution of the embodiment of the present disclosure.

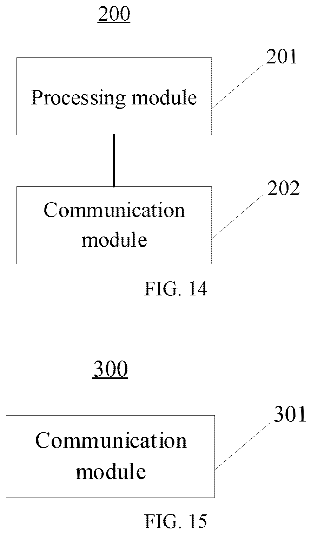

FIG. 14 is a block diagram illustrating a communication device 200 according to an exemplary embodiment. Referring to FIG. 14, the device 200 includes a processing module 201 and a communication module 202.

The processing module 201 is configured to scramble a plurality of different codewords by using different scrambling manners, wherein the plurality of different codewords are mapped to different data layers. The communication module 202 is configured to perform communication based on the plurality of different codewords scrambled, wherein the communication is based on the physical uplink shared channel.

In an implementation, the processing module 201 is further configured to: scramble the plurality of different codewords by respectively using different pseudo-random sequence functions. The different pseudo-random sequence functions are determined based on different random sequence initialization functions.

In an implementation, the random sequence initialization functions are determined based on identity information, and the different random sequence initialization functions correspond to different identity information. The identity information includes terminal identity information, or the identity information includes the terminal identity information and a codeword identity. The terminal identity information includes a radio network temporary identity (RNTI) corresponding to the terminal and a cell identity of a serving cell of the terminal.

In an implementation, the communication module 202 is further configured to: receive a plurality of different first identity configuration parameters sent by a network device. The different first identity configuration parameters are configured to configure the different identity information.

In an implementation, the communication module 202 is further configured to: receive a second identity configuration parameter and offset information sent by a network device. The second identity configuration parameter is configured to configure first identity information in the different identity information, and the offset information is configured for the terminal to determine second identity information based on the first identity information and the offset information. The second identity information is identity information in the different identity information different from the first identity information.

In an implementation, the second identity information, the first identity information, and the offset information satisfy a formula of: n_ID_1=mod(n_ID_0+OFFSET,1024), where n_ID_1 represents the second identity information, n_ID_0 represents the first identity information, OFFSET represents the offset information, and mod() represents a modulo function.

In an implementation, the physical uplink shared channel (PUSCH) includes: a dynamic grant physical uplink shared channel (DG PUSCH); or a configured grant physical uplink shared channel (CG PUSCH).

FIG. 15 is a block diagram of a communication device 300 according to an exemplary embodiment. Referring to FIG. 15, the device 300 includes: a communication module 301 configured to perform communication with a terminal based on a plurality of different codewords scrambled, in which the communication is based on a physical uplink shared channel. The plurality of different codewords is mapped to different data layers, and the plurality of different codewords is scrambled by respectively using different scrambling manners.

In an implementation, the plurality of different codewords is scrambled by respectively using different pseudo-random sequence functions. The different pseudo-random sequence functions are determined based on different random sequence initialization functions.

In an implementation, the random sequence initialization functions are determined based on identity information, and the different random sequence initialization functions correspond to different identity information. The identity information includes terminal identity information, or the identity information includes the terminal identity information and a codeword identity. The terminal identity information includes a radio network temporary identity (RNTI) corresponding to the terminal and a cell identity of a serving cell of the terminal.

In an implementation, the communication module 301 is further configured to: send a plurality of different first identity configuration parameters. The different first identity configuration parameters are configured to configure the different identity information.

In an implementation, the communication module 301 is further configured to: send a second identity configuration parameter and offset information. The second identity configuration parameter is configured to configure first identity information in the different identity information, and the offset information is configured for the terminal to determine second identity information based on the first identity information and the offset information. The second identity information is identity information in the different identity information different from the first identity information.

In an implementation, the second identity information, the first identity information, and the offset information satisfy a formula of: $n\_ID\_1=mod(n\_ID\_0+OFFSET,1024)$, where $n\_ID\_1$ represents the second identity information, $n\_ID\_0$ represents the first identity information, OFFSET represents the offset information, and mod() represents a modulo function.

In an implementation, the physical uplink shared channel (PUSCH) includes: a dynamic grant physical uplink shared channel (DG PUSCH); or a configured grant physical uplink shared channel (CG PUSCH).

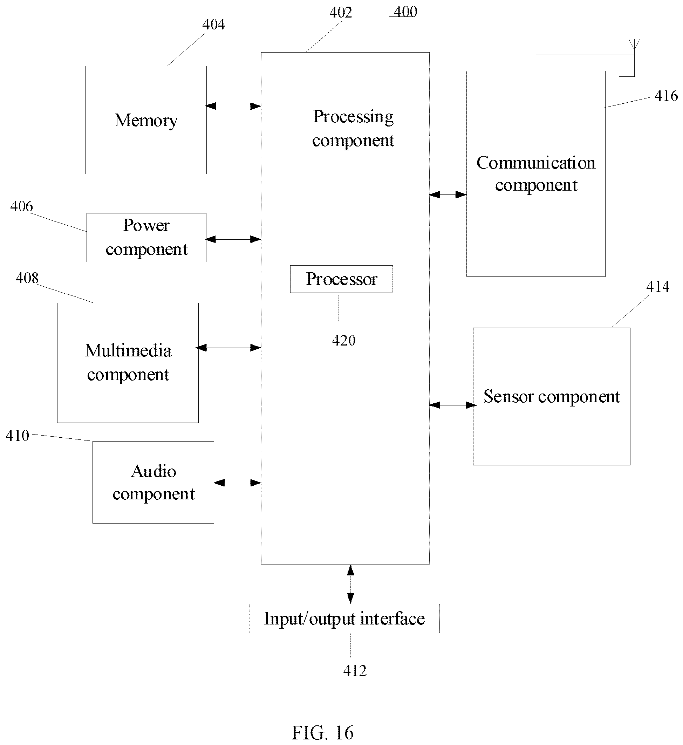

FIG. 16 is a block diagram of a communication device 400 according to an exemplary embodiment. For example, the device 400 may be a mobile phone, a computer, a digital broadcasting terminal, a messaging device, a game console, a tablet device, a medical device, a fitness device, a personal digital assistant, or the like.

Referring to FIG. 16, the device 400 may include one or more of a processing component 402, a memory 404, a power component 406, a multimedia component 408, an audio component 410, an input/output (I/O) interface 412, a sensor component 414, and a communication component 416.

The processing component 402 generally controls the overall operations of the device 400, such as operations associated with display, telephone calls, data communications, camera operations, and recording operations. The processing component 402 may include one or more processors 420 to execute instructions to complete all or part of the steps of the foregoing method. In addition, the processing component 402 may include one or more modules to facilitate interaction between the processing component 402 and other components. For example, the processing component 402 may include a multimedia module to facilitate the interaction between the multimedia component 408 and the processing component 402.

The memory 404 is configured to store various types of data to support the operation at the device 400. Examples of these data include instructions for any application or method operating on the device 400, contact data, phone book data, messages, pictures, videos and the like. The memory 404 may be implemented by any type of volatile or non-volatile storage device or a combination thereof, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 406 provides power to various components of the device 400. The power component 406 may include a power management system, one or more power supplies, and other components associated with generating, managing, and distributing power for the device 400.

The multimedia component 408 includes a screen that provides an output interface between the device 400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 408 includes a front camera and/or a rear camera. When the device 400 is in an operation mode, such as a shooting mode or a video mode, the front camera and/or the rear camera can receive external multimedia data. Each of the front camera and rear camera may be a fixed optical lens system or have focal length and optical zoom capabilities.

The audio component 410 is configured to output and/or input audio signals. For example, the audio component 410 includes a microphone (MIC), and when the device 400 is in an operation mode, such as a call mode, a recording mode, and a voice recognition mode, the microphone is configured to receive an external audio signal. The received audio signal can be further stored in the memory 404 or sent via the communication component 416. In some embodiments, the audio component 410 further includes a speaker for outputting audio signals.

The I/O interface 412 provides an interface between the processing component 402 and a peripheral interface module. The above-mentioned peripheral interface module may be a keyboard, a click wheel, a button, and the like. These buttons may include but are not limited to home button, volume button, start button, and lock button.

The sensor component 414 includes one or more sensors for providing the device 400 with various aspects of state evaluation. For example, the sensor component 414 can detect the on/off status of the device 400 and the relative positioning of components. For example, the component is a display and keypad of the device 400. The sensor component 414 can also detect the position change of the device 400 or a component of the device 400, the presence or absence of contact between the user and the device 400, the orientation or acceleration/deceleration of the device 400, and the temperature change of the device 400. The sensor component 414 may include a proximity sensor configured to detect the presence of nearby objects when there is no physical contact. The sensor component 414 may also include a light sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate wired or wireless communication between the device 400 and other devices. The device 400 can access a wireless network based on a communication standard, such as WiFi, 2G, or 3G, or a combination thereof. In an exemplary embodiment, the communication component 416 receives a broadcast signal or broadcast related information from an external broadcast management system via a broadcast channel. In an exemplary embodiment, the communication component 416 further includes a near field communication (NFC) module to facilitate short-range communication. For example, the NFC module can be implemented based on radio frequency identity (RFID) technology, infrared data association (IrDA) technology, ultra-wideband (UWB) technology, Bluetooth (BT) technology and other technologies.

In an exemplary embodiment, the device 400 may be implemented by one or more of application specific integrated circuit (ASIC), digital signal processor (DSP), digital signal processing device (DSPD), programmable logic devices (PLD), field programmable gate array (FPGA), controller, microcontroller, microprocessor, or other electronic components, to perform the above-mentioned methods.

An exemplary embodiment also provides a non-transitory computer-readable storage medium including instructions, such as the memory 404 including instructions, and the instructions may be executed by the processor 420 of the device 400 to complete the foregoing method. For example, the non-transitory computer-readable storage medium may be ROM, random access memory (RAM), CD-ROM, magnetic tape, floppy disk, optical data storage device and the like.

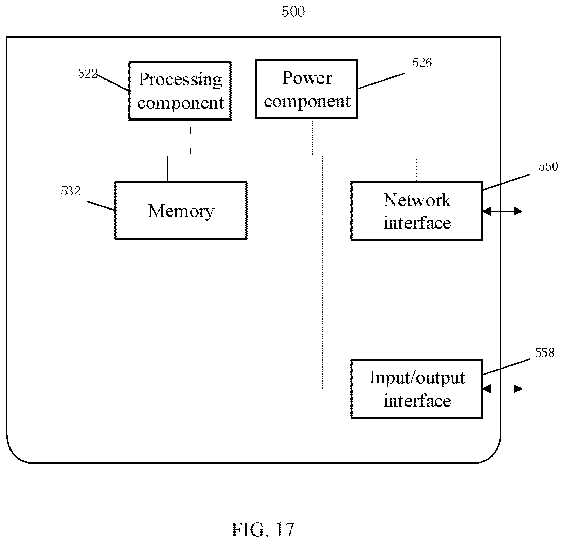

FIG. 17 is a schematic diagram of a communication device 500 according to an exemplary embodiment. For example, the device 500 may be provided as base station or a server. Referring to FIG. 17, the device 500 includes a processing component 522 which further includes one or more processors, and a memory resource which is represented by a memory 532 and is configured for storing instructions such as application programs executable by the processing component 522. The application program stored in the memory 532 may include one or more modules each corresponding to a set of instructions. Furthermore, the processing component 522 is configured to execute instructions to perform the above methods.

The device 500 may also include a power component 526 configured to perform power management of the device 500, a wired or wireless network interface 550 configured to connect the device 500 to a network, and an input/output (I/O) interface 558. The device 500 may operate based on an operating system stored in memory 532, such as Windows Server™, Mac OS X™, Unix™, Linux™, Free BSD™ or the like.

In the present disclosure, a plurality of codewords are scrambled by respectively using different scrambling manners, and PUSCH-based communication is performed based on the plurality of different codewords scrambled, which enables a plurality of codewords to be scrambled in PUSCH transmission with a maximum of 8 layers of uplink transmission. This reduces transmission interference between different codewords in the uplink transmission, ensures normal communication, and improves transmission quality.

It is further to be understood that the term "a plurality" in the present disclosure means two or more, and other quantifiers are similar. The term "and/or", when describing the association of associated objects, indicates that three relationships can exist, for example, A and/or B, which can indicate the presence of A alone, A and B together, and B alone. The character "/" generally indicates an "or" relationship between the preceding and following associated objects. The singular forms "a", "said" and "the" are also intended to include plural forms, unless the context clearly indicates otherwise.

It is further to be understood that the meanings of the terms "in response to ..." and "if" involved in the present disclosure are dependent on the context and the actual usage scenario, for example, the term "in response to ..." used herein may be interpreted as "at the time of ......" or "when ......" or "if".

It is further to be understood that the terms "first", "second" and the like are used to describe various information, but such information should not be limited to these terms. These terms are only used to distinguish information of the same type from one another and do not indicate a particular order or level of importance. In fact, the expressions "first" and "second" may be used interchangeably. For example, without departing from the scope of the present disclosure, first information may also be referred to as second information, and similarly, second information may also be referred to as first information.

It is further to be understood that although the operations are depicted in the accompanying drawings in a particular order in the embodiments of the present disclosure, this should not be construed as requiring that the operations be performed in the particular order shown or in serial order, or that all of the operations shown be performed to obtain the desired results. Multitasking and parallel processing may be advantageous in particular environments.

A person skilled in the art may easily conceive of other embodiments of the present disclosure upon consideration of the specification and practice of the invention disclosed herein. The present disclosure is intended to cover any variations, uses, or adaptations of the present disclosure that follow the general principles of the present disclosure and include the common general knowledge or conventional technical means in the technical field not disclosed by the present disclosure.

It is to be understood that the present disclosure is not limited to the precise structures described above and illustrated in the accompanying drawings, and that various modifications and changes may be made without departing from the scope thereof. The scope of the present disclosure is limited only by the appended claims.

**Claims**

1. A communication method performed by a terminal, comprising:

   scrambling a plurality of different codewords by using different scrambling manners, wherein the plurality of different codewords are mapped to different data layers; and
   performing communication based on the plurality of different codewords scrambled, wherein the communication is based on the physical uplink shared channel.

2. The communication method according to claim 1, wherein scrambling the plurality of different codewords by using the different scrambling manners comprises:

   scrambling the plurality of different codewords by respectively using different pseudo-random sequence functions,
   wherein the different pseudo-random sequence functions are determined based on different random sequence initialization functions.

3. The communication method according to claim 2, wherein the random sequence initialization functions are determined based on identity information, and the different random sequence initialization functions correspond to different identity information,

   the identity information comprises terminal identity information, or the identity information comprises the terminal identity information and a codeword identity, and
   wherein the terminal identity information comprises a radio network temporary identity, RNTI, corresponding to the terminal and a cell identity of a serving cell of the terminal.

4. The communication method according to claim 3, further comprising:

   receiving a plurality of different first identity configuration parameters sent by a network device,
   wherein the different first identity configuration parameters are configured to configure the different identity information.

5. The communication method according to claim 3, further comprising:

   receiving a second identity configuration parameter and offset information sent by a network device,
   the second identity configuration parameter is configured to configure first identity information in the different identity information, and the offset information is configured for the terminal to determine second identity information based on the first identity information and the offset information, and
   the second identity information is identity information in the different identity information different from the first identity information.

6. The communication method according to claim 5, wherein the second identity information, the first identity information, and the offset information satisfy a formula of:

$$n\_ID\_1 = mod(n\_ID\_0 + OFFSET, 1024)$$

where n_ID_1 represents the second identity information, n_ID_0 represents the first identity information, OFFSET represents the offset information, and mod() represents a modulo function.

7. The communication method according to claim 1, wherein the physical uplink shared channel, PUSCH, comprises:

   a dynamic grant physical uplink shared channel, DG PUSCH; or
   a configured grant physical uplink shared channel, CG PUSCH.

8. A communication method by a network device, comprising:
   performing communication with a terminal based on a plurality of different codewords scrambled, wherein the communication is based on a physical uplink shared channel, the plurality of different codewords are mapped to different data layers, and the plurality of different codewords are scrambled by respectively using different scrambling manners.

9. The communication method according to claim 8, wherein the plurality of different codewords are scrambled by respectively using different pseudo-random sequence functions,
   wherein the different pseudo-random sequence functions are determined based on different random sequence initialization functions.

10. The communication method according to claim 9, wherein the random sequence initialization functions are determined based on identity information, and the different random sequence initialization functions correspond to different identity information,

    the identity information comprises terminal identity information, or the identity information comprises the terminal identity information and a codeword identity, and
    wherein the terminal identity information comprises a radio network temporary identity, RNTI, corresponding to the terminal and a cell identity of a serving cell of the terminal.

11. The communication method according to claim 10, further comprising:

    sending a plurality of different first identity configuration parameters,
    wherein the different first identity configuration parameters are configured to configure the different identity information.

12. The communication method according to claim 8, further comprising:

    sending a second identity configuration parameter and offset information,
    the second identity configuration parameter is configured to configure first identity information in the different identity information, and the offset information is configured for the terminal to determine second identity information based on the first identity information and the offset information, and
    the second identity information is identity information in the different identity information different from the first identity information.

13. The communication method according to claim 12, wherein the second identity information, the first identity information, and the offset information satisfy a formula of:

$$n\_ID\_1 = mod(n\_ID\_0 + OFFSET, 1024)$$

where n_ID_1 represents the second identity information, n_ID_0 represents the first identity information, OFFSET represents the offset information, and mod() represents a modulo function.

14. The communication method according to claim 8, wherein the physical uplink shared channel, PUSCH comprises:

    a dynamic grant physical uplink shared channel, DG PUSCH; or

a configured grant physical uplink shared channel, CG PUSCH.

15. A communication device, comprising:

a processing module, configure to scramble a plurality of different codewords by using different scrambling manners, wherein the plurality of different codewords are mapped to different data layers; and
a communication module, configured to perform communication based on the plurality of different codewords scrambled, wherein the communication is based on the physical uplink shared channel.

16. The communication device according to claim 15, wherein the processing module is further configured to:

scramble the plurality of different codewords by respectively using different pseudo-random sequence functions, wherein the different pseudo-random sequence functions are determined based on different random sequence initialization functions.

17. The communication device according to claim 16, wherein the random sequence initialization functions are determined based on identity information, and the different random sequence initialization functions correspond to different identity information,

the identity information comprises terminal identity information, or the identity information comprises the terminal identity information and a codeword identity, and
wherein the terminal identity information comprises a radio network temporary identity, RNTI, corresponding to the terminal and a cell identity of a serving cell of the terminal.

18. The communication device according to claim 17, wherein the communication module is further configured to:

receive a plurality of different first identity configuration parameters sent by a network device,
wherein the different first identity configuration parameters are configured to configure the different identity information.

19. The communication device according to claim 17, wherein the communication module is further configured to:

receive a second identity configuration parameter and offset information sent by a network device,
the second identity configuration parameter is configured to configure first identity information in the different identity information, and the offset information is configured for the terminal to determine second identity information based on the first identity information and the offset information, and
the second identity information is identity information in the different identity information different from the first identity information.

20. The communication device according to claim 19, wherein the second identity information, the first identity information, and the offset information satisfy a formula of:

$$n\_ID\_1 = mod(n\_ID\_0 + OFFSET, 1024)$$

where n_ID_1 represents the second identity information, n_ID_0 represents the first identity information, OFFSET represents the offset information, and mod() represents a modulo function.

21. The communication device according to claim 15, wherein the physical uplink shared channel, PUSCH, comprises:

a dynamic grant physical uplink shared channel, DG PUSCH; or
a configured grant physical uplink shared channel, CG PUSCH.

22. A communication device, comprising:

a communication module, configured to perform communication with a terminal based on a plurality of different codewords scrambled, wherein the communication is based on a physical uplink shared channel,
the plurality of different codewords are mapped to different data layers, and the plurality of different codewords are scrambled by respectively using different scrambling manners.

23. The communication device according to claim 22, wherein the plurality of different codewords are scrambled by respectively using different pseudo-random sequence functions,
wherein the different pseudo-random sequence functions are determined based on different random sequence initialization functions.

24. The communication device according to claim 23, wherein the random sequence initialization functions are determined based on identity information, and the different random sequence initialization functions correspond to different identity information,

the identity information comprises terminal identity information, or the identity information comprises the terminal identity information and a codeword identity, and
wherein the terminal identity information comprises a radio network temporary identity, RNTI, corresponding to the terminal and a cell identity of a serving cell of the terminal.

25. The communication device according to claim 24, wherein the communication module is further configured to:

send a plurality of different first identity configuration parameters,
wherein the different first identity configuration parameters are configured to configure the different identity information.

26. The communication device according to claim 22, wherein the communication module is further configured to:

send a second identity configuration parameter and offset information,
the second identity configuration parameter is configured to configure first identity information in the different identity information, and the offset information is configured for the terminal to determine second identity information based on the first identity information and the offset information, and
the second identity information is identity information in the different identity information different from the first identity information.

27. The communication device according to claim 26, wherein the second identity information, the first identity information, and the offset information satisfy a formula of:

$$n\_ID\_1=mod(n\_ID\_0+OFFSET,1024)$$

where n_ID_1 represents the second identity information, n_ID_0 represents the first identity information, OFFSET represents the offset information, and mod() represents a modulo function.

28. The communication device according to claim 22, wherein the physical uplink shared channel, PUSCH comprises:

a dynamic grant physical uplink shared channel, DG PUSCH; or
a configured grant physical uplink shared channel, CG PUSCH.

29. A communication device, comprising:

a processor; and
a memory for storing processor-executable instructions,
wherein the processor is configured to call the instructions stored in the memory to perform the communication method according to any one of claims 1 to 7.

30. A communication device, comprising:

a processor; and
a memory for storing processor-executable instructions,
wherein the processor is configured to call the instructions stored in the memory to perform the communication method according to any one of claims 8 to 14.

31. A storage medium having instructions stored thereon that, when being executed by a processor of a terminal, enable the terminal to perform the communication method according to any one of claims 1 to 7.

32. A storage medium having instructions stored thereon that, when being executed by a processor of a network device, enable the network device to perform the communication method according to any one of claims 8 to 14.

100

110

120

FIG. 1

| CW 0 | CW-to-layer mapping |
| Rank=1 | |

| CW 0 | CW-to-layer mapping |
| Rank=2 | |

| CW 0 | CW-to-layer mapping |
| Rank=3 | |

| CW 0 | CW-to-layer mapping |
| Rank=4 | |

| CW 0 | CW-to-layer mapping |

| CW 0 | CW-to-layer mapping |

| CW 0 | CW-to-layer mapping |

| CW 0 | CW-to-layer mapping |

| CW 1 | CW-to-layer mapping |
| Rank=5 | |

| CW 1 | CW-to-layer mapping |
| Rank=6 | |

| CW 1 | CW-to-layer mapping |
| Rank=7 | |

| CW 1 | CW-to-layer mapping |
| Rank=8 | |

FIG. 2

Scrambling a plurality of different codewords by using different scrambling manners, in which the plurality of different codewords are mapped to different data layers — S11

Performing PUSCH-based communication based on the plurality of different codewords scrambled — S12

FIG. 3

Scrambling a plurality of different codewords by using different pseudo-random sequence functions, in which the different pseudo-random sequence functions are determined based on different random sequence initialization functions — S21

Performing PUSCH-based communication based on the plurality of different codewords scrambled — S22

FIG. 4

Determining a random sequence initialization function based on identity information including terminal identity information   S31

Determining a pseudo-random sequence function based on the random sequence initialization function   S32

Scrambling a plurality of different codewords by using different pseudo-random sequence functions, in which the different pseudo-random sequence functions are determined based on different random sequence initialization functions   S33

Performing PUSCH-based communication based on the plurality of different codewords scrambled   S34

FIG. 5

Determining a random sequence initialization function based on identity information including terminal identity information and a codeword identity

S41

Determining a pseudo-random sequence function based on the random sequence initialization function

S42

Scrambling a plurality of different codewords by using different pseudo-random sequence functions, in which the different pseudo-random sequence functions are determined based on different random sequence initialization functions

S43

Performing PUSCH-based communication based on the plurality of different codewords scrambled

S44

FIG. 6

Receiving a plurality of different first identity configuration parameters sent by a network device, in which the different first identity configuration parameters configure the different identity information

S51

Determining the identity information based on the first identity configuration parameter

S52

FIG. 7

Receiving a second identity configuration parameter and offset information sent by a network device — S61

Determining second identity information based on the offset information and the first identity information — S62

FIG. 8

Scrambling a plurality of different codewords by using different scrambling manners, in which the plurality of different codewords are mapped to different data layers — S71

Performing PUSCH-based communication based on the plurality of different codewords scrambled — S72

FIG. 9

Scrambling a plurality of different codewords by using different scrambling manners, in which the plurality of different codewords are mapped to different data layers — S81

Performing CG PUSCH-based communication based on the plurality of different codewords scrambled — S82

FIG. 10

Performing PUSCH-based communication with a terminal based on a plurality of different codewords scrambled

S91

FIG. 11

Sending a plurality of different first identity configuration parameters, in which the different first identity configuration parameters are configured to configure the different identity information

S101

FIG. 12

Sending a second identity configuration parameter and offset information, in which the second identity configuration parameter is configured to configure first identity information in the different identity information, the offset information is configured for the terminal to determine second identity information based on the first identity information and the offset information, and the second identity information is identity information in the different identity information different from the first identity information

S111

FIG. 13

200

| Processing module | 201 |

| Communication module | 202 |

FIG. 14

300

| Communication module | 301 |

FIG. 15

404  402  _400_

Memory

Power
component

Multimedia
component

Audio
component

406

408

410

Processing
component

Processor

420

Input/output interface

412

Communication
component

Sensor component

416

414

FIG. 16

500

FIG. 17

## INTERNATIONAL SEARCH REPORT

| International application No. |
| --- |
| **PCT/CN2023/076280** |

### A.  CLASSIFICATION OF SUBJECT MATTER

H04L1/00(2006.01)i

According to International Patent Classification (IPC) or to both national classification and IPC

### B.  FIELDS SEARCHED

Minimum documentation searched (classification system followed by classification symbols)

IPC: H04L; H04W; H04Q

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN, 3GPP: 加扰, 码字, 不同, 第一, 第二, 层, 物理上行共享信道, Scrambl+, codeword, code word, different, first, second, layer, PUSCH

### C.  DOCUMENTS CONSIDERED TO BE RELEVANT

| Category* | Citation of document, with indication, where appropriate, of the relevant passages | Relevant to claim No. |
| --- | --- | --- |
| Y | WO 2021184327 A1 (QUALCOMM INC. et al.) 23 September 2021 (2021-09-23) description, paragraphs 0002-0103 | 1-32 |
| Y | CN 109792318 A (QUALCOMM INC.) 21 May 2019 (2019-05-21) description, paragraphs 0002-0184 | 1-32 |
| Y | CN 108988978 A (HUAWEI TECHNOLOGIES CO., LTD.) 11 December 2018 (2018-12-11) description, paragraph 0003 | 1-32 |
| A | CATT. "Remaining issues on multi-TRP/panel transmission" *3GPP TSG RAN WG1 #99 R1-1912176*, 22 November 2019 (2019-11-22), entire document | 1-32 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 October 2023** | **24 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/076280**

| Patent document cited in search report | | | Publication date (day/month/year) | Patent family member(s) | | | Publication date (day/month/year) |
|---|---|---|---|---|---|---|---|
| WO | 2021184327 | A1 | 23 September 2021 | | None | | |
| CN | 109792318 | A | 21 May 2019 | US | 2018248597 | A1 | 30 August 2018 |
| | | | | US | 2018102877 | A1 | 12 April 2018 |
| | | | | WO | 2018068005 | A1 | 12 April 2018 |
| | | | | EP | 3523904 | A1 | 14 August 2019 |
| CN | 108988978 | A | 11 December 2018 | EP | 3624371 | A1 | 18 March 2020 |
| | | | | US | 2020099461 | A1 | 26 March 2020 |
| | | | | WO | 2018219250 | A1 | 06 December 2018 |

Form PCT/ISA/210 (patent family annex) (July 2022)